# EUROPÄISCHE PATENTSCHRIFT

(11) **EP 3 130 527 B1**
(45) Veröffentlichungstag und Bekanntmachung des Hinweises auf die Patenterteilung: **31.07.2019**
(21) Anmeldenummer: 16170396.2
(22) Anmeldetag: 19.05.2016
(51) Int. Cl.: B62D 25/00, B62D 25/08

(54) **HALTEVORRICHTUNG FÜR DIE ÜBERTRAGUNG VON LADUNGEN IN EINEM KRAFTFAHRZEUG**
SUPPORT DEVICE FOR CHARGE TRANSFER ON A MOTOR VEHICLE
DISPOSITIF D'APPUI POUR LE TRANSFERT DE CHARGES SUR UN VÉHICULE AUTOMOBILE

(30) Priorität: 11.08.2015 DE 102015113233
(43) Veröffentlichungstag der Anmeldung: 15.02.2017
(73) Patentinhaber: Meleghy Automotive GmbH & Co. KG, 57234 Wilnsdorf (DE)
(72) Erfinder: Jahn, Joachim, 47495 Rheinberg-Borth (DE); Vogt, Karl-Ulrich, 57462 Olpe-Rhode (DE)
(74) Vertreter: Kalkoff & Partner

(56) Entgegenhaltungen:
- EP-A2- 1 400 437
- DE-A1-102005 036 254
- JP-A- H1 035 235
- US-A1- 2007 246 971
- US-A1- 2014 306 417
- US-A1- 2015 183 470

## Beschreibung

Die Erfindung betrifft eine Stützvorrichtung zur Übertragung von Lasten an einem Kraftfahrzeug, mit
- einem ersten Anschlussabschnitt zur Verbindung mit einem ersten Kraftfahrzeugbauteil,
- einem zweiten Anschlussabschnitt zur Verbindung mit einem zweiten Kraftfahrzeugbauteil und
- einem den ersten und zweiten Anschlussabschnitt verbindenden Träger.

Stützvorrichtungen der eingangs genannten Art sind in vielfältigen Ausgestaltungen aus dem Stand der Technik, beispielsweise aus den Druckschriften US 2015/0183470 A1, US 2014/0306417 A1 und JP H10 35235, bekannt. Als Streben ausgebildet dienen Stützvorrichtungen bei Kraftfahrzeugen z. B. dazu, der Karosserie die geforderte Stabilität und Festigkeit zu verleihen, wobei die Strebe an mindestens zwei Kraftfahrzeugbauteilen, d. h. unterschiedlichen Abschnitte des Kraftfahrzeugs, bspw. der Karosserie, befestigt ist, die dann durch die Strebe gegeneinander abgestützt sind. Ein typisches Beispiel einer Stützvorrichtung stellt eine Domstrebe dar, die insbesondere bei Cabriolets oder Roadstern der Karosserie die gewünschte Torsionsfestigkeit verleiht. Die Domstrebe ist hierzu an beiden vorderen oder hinteren Federbeindomen angeordnet und gewährleistet somit, dass die Lage der Dome zueinander festgelegt ist, so dass sich die Geometrie des Fahrwerks nicht verändert.

Der bestimmungsgemäße Einsatz derartiger Stützvorrichtungen macht es erforderlich, diese einerseits zur ortsfesten Anbindung an den gegeneinander abzustützenden Kraftfahrzeugbauteilen auszubilden und andererseits so stabil auszugestalten, dass gewährleistet ist, dass die im Betrieb auftretenden Kräfte und Momente zuverlässig übertragen werden. Aus dem Stand der Technik ist es bekannt, die an den Kraftfahrzeugbauteilen anzuordnende Anschlussabschnitte als separate Bauteile entsprechend der Geometrie der Kraftfahrzeugbauteile auszugestalten und diese dann zur Bildung der Stützvorrichtung mit einem stabilen Träger zu verbinden, welcher zur Übertragung der auftretenden Lasten ausgebildet ist. Die Verbindung der Anschlussabschnitte mit dem Träger erfolgt dann üblicherweise durch thermische Fügeverfahren. Eine derartige Herstellung weist jedoch den Nachteil auf, dass sie zeit- und kostenaufwändig ist. Zudem besteht die Gefahr eines thermischen Verzugs sowie von Gefügeänderungen aufgrund der bspw. beim Schweißen stattfindenden Wärmeeinbringung in die Bauteile der Stützvorrichtung.

Der Erfindung liegt die Aufgabe zugrunde eine Stützvorrichtung bereitzustellen, die sich kostengünstig herstellen lässt und eine zuverlässige Übertragung der auftretenden Lasten gewährleistet.

Die Erfindung löst die Aufgabe durch eine Stützvorrichtung mit den Merkmalen des Anspruchs 1. Vorteilhafte Weiterbildungen der Erfindung sind in den abhängigen Ansprüchen angegeben.

Kennzeichnend für die erfindungsgemäße Stützvorrichtung ist, dass der erste Anschlussabschnitt und/oder zweite Anschlussabschnitt der Stützvorrichtung ein separates Anschlusselement mit einem einlagigen Verbindungsabschnitt aufweist. Der Verbindungsabschnitt ist dabei zur Bildung der Stützvorrichtung in einem rohrförmigen Aufnahmeabschnitt des Trägers angeordnet und durch eine Clinchverbindung ortsfest mit dem Aufnahmeabschnitt verbunden. Unter einer Clinchverbindung wird dabei im Rahmen der vorliegenden Erfindung eine Verbindung verstanden, die bevorzugt ohne Zusatz- oder Hilfsfügeteile eine unlösbare Verbindung durch lokale Kaltverformung herstellt. Durch die beim Clinchen stattfindende Umformung wird zwischen dem Aufnahmeabschnitt des Trägers und dem Verbindungsabschnitt des Anschlusselements eine zuverlässige formschlüssige Verbindung erzeugt, die eine stabile, sämtliche im Betrieb auftretenden Kräfte und Momente übertragende Stützvorrichtung gewährleistet. Die Ausgestaltung und Formgebung der Clinchverbindung kann dabei grundsätzlich, auch unter Berücksichtigung der zu übertragenden Lasten, in vielfältiger Weise erfolgen.

Nach der Herstellung der Clinchverbindung zwischen dem rohrförmigen Aufnahmeabschnitt des Trägers und dem einlagigen Verbindungsabschnitts des Anschlusselements ist der rohrförmige Aufnahmeabschnitt derart verformt, dass die Stützvorrichtung im Bereich der Clinchverbindung im Querschnitt dreilagig ausgebildet ist, wobei der einlagige Verbindungsabschnitt mit seinen gegenüberliegenden Flächen an den einander gegenüberliegenden Flächen des rohrförmigen Aufnahmeabschnitts anliegt. Die an den Verbindungsabschnitt angepasste Ausgestaltung des Aufnahmeabschnitts kann dabei bereits vor einer Anordnung des Verbindungsabschnitts in den Aufnahmeabschnitt erfolgen, bspw. durch entsprechendes Flachdrücken eines Rohrabschnitts, so dass dieser einen an den Verbindungsabschnitt angepassten Querschnitt aufweist.

Beim Herstellen der Clinchverbindung, d. h. beim Clinchen, das auch unter dem Begriff Durchsetzfügen bekannt ist, werden einander gegenüberliegende Bereiche des rohrförmigen Aufnahmeabschnitts sowie ein Bereich des darin angeordneten Verbindungsabschnitts des Anschlusselements gemeinsam in einem einen Stempel und eine Matrize aufweisenden Werkzeug durch den Stempel unter plastischer Deformation in die Matrize gedrückt, so dass eine zuverlässige kraft- und vor allem formschlüssige Verbindung erzeugt wird, durch die das Anschlusselement zuverlässig an den Träger festgelegt ist.

Die Clinchverbindung zeichnet sich dabei insbesondere dadurch aus, dass vollständig auf ergänzende Befestigungsmittel, wie bspw. Klebemittel, verzichtet werden kann. Im Gegensatz zu thermischen Fügeverfahren ist zudem ausgeschlossen, dass es aufgrund der dabei stattfindenden Wärmeeinbringung zu schädigenden Gefügeänderungen an dem Anschlusselement und/oder Träger kommt oder ein thermischer Verzug auftritt, der eine Anbringung der Stützvorrichtung am Kraftfahrzeug erschwert oder behindert.

Die erfindungsgemäße Stützvorrichtung lässt sich somit besonders einfach und kostengünstig herstellen. Die Verwendung eines separaten Anschlusselements, welches mit dem Träger über den rohrförmigen Aufnahmeabschnitt verbindbar ist, ermöglicht es, den Träger weitestgehend unabhängig von dem Anschlusselement entsprechend der aufzutretenden Lasten auszuwählen. Das Anschlusselement kann zudem in einfacher Weise entsprechend der Geometrie des anzuschließenden Kraftfahrzeugbauteils ausgelegt werden.

Gemäß der Erfindung weist die Stützvorrichtung mindestens ein Anschlusselement auf, das separat von dem Träger ausgebildet ist und mit einem Verbindungsabschnitt mit einem rohrförmigen Aufnahmeabschnitt des Trägers ortsfest verbunden ist. Grundsätzlich kann auch der weitere, dem ersten Anschlussabschnitt gegenüberliegende zweite Anschlussabschnitt in derartiger Weise gebildet sein, d. h. ein Anschlusselement aufweisen, welches mit einem rohrförmigen Aufnahmeabschnitt des Trägers durch eine Clinchverbindung verbunden ist. Erfindungsgemäß ist jedoch vorgesehen, dass eines von dem ersten Anschlussabschnitt und dem zweiten Anschlussabschnitt einstückig mit dem Träger ausgebildet ist. Demgemäß kann der Anschlussabschnitt beispielsweise durch eine entsprechende Formgebung des Endabschnitts des Trägers gebildet werden, so dass dieser dann an einem entsprechenden Kraftfahrzeugbauteil angeordnet werden kann. Im Falle der vorgesehenen Verwendung eines Rohrkörpers kann der einstückig mit dem Träger ausgebildete Anschlussabschnitt beispielsweise durch ein einfaches Flachpressen des Rohrkörpers gebildet werden, wobei der Anschlussabschnitt dann an geeigneter Stelle mit dem Kraftfahrzeugbauteil verbunden, beispielsweise verschraubt werden kann. Dies ermöglicht in ergänzender Weise eine kostengünstige Herstellung der Stützvorrichtung, da zur Herstellung des zweiten Anschlussabschnitts auf ein separates Anschlusselement sowie dessen bevorzugte Verbindung durch Clinchen verzichtet werden kann.
Die Ausgestaltung des Trägers kann grundsätzlich in beliebiger Weise erfolgen, wobei dieser zur Anordnung des Verbindungsabschnitts des Anschlusselements lediglich einen entsprechend ausgebildeten rohrförmigen Aufnahmeabschnitt aufweisen muss. Nach einer besonders vorteilhaften Ausgestaltung der Erfindung ist jedoch vorgesehen, dass der Träger einen sich von dem ersten Anschlussabschnitt zum zweiten Anschlussabschnitt erstreckenden Rohrkörper aufweist, besonders bevorzugt aus einem solchen Rohrkörper gebildet ist. Die Verwendung eines Rohrkörpers zeichnet sich dabei insbesondere dadurch aus, dass dieser zum einen in besonders vorteilhafter Weise dazu geeignet ist, sämtliche im Betrieb auftretenden Zug-, Druck- und Querkräfte zuverlässig zu übertragen. Darüber hinaus zeichnet sich der Rohrkörper durch seine Eignung zur Schwingungsaufnahme aus. Ein weiterer Vorteil in der Verwendung eines Rohrkörpers besteht darin, dass dessen Endabschnitte in einfacher Weise zur Bildung der an den Verbindungsabschnitt des Anschlusselements angepasster rohrförmiger Aufnahmeabschnitt genutzt werden kann, wodurch sich die Stützvorrichtungen besonders einfach und kostengünstig herstellen lassen.

Auch der Querschnitt des Rohrkörpers kann in beliebiger Weise entsprechend der auftretenden Lasten frei gewählt werden. So kann der Rohrkörper bspw. einen polygonalen Querschnitt besitzen. Ferner kann sich der Querschnitt auch in Längsachsenrichtung des Trägers in Form, Umfang, Durchmesser und/oder Wanddicke verändern. Nach einer besonders vorteilhaften Weiterbildung der Erfindung ist vorgesehen, dass der Rohrkörper einen kreisförmigen Querschnitt aufweist. Die Verwendung eines rohrförmigen Körper smit einem kreisförmigen Querschnitt zeichnet sich dabei dadurch aus, dass er in besonders zuverlässiger Weise die auftretenden Lasten überträgt, sowie zur Aufnahme sämtlicher im Betrieb auftretenden Schwingungen geeignet ist. Darüber hinaus lässt sich aufgrund des vielfältigen Angebots standardisierter Rohrkörper die Stützvorrichtung besonders einfach und kostengünstig herstellen, wobei auch die Ausbildung des Aufnahmeabschnitts in einfacher Weise durch Flachdrücken der Endabschnitte des Rohrkörpers erfolgen kann.

Die erfindungsgemäße Stützvorrichtung weist grundsätzlich wenigstens zwei Anschlussabschnitte auf, welche an einem ersten und einem zweiten Kraftfahrzeugbauteil anordbar sind, sodass über die Stützvorrichtung diese Kraftfahrzeugbauteile gegeneinander abgestützt werden. Nach einer besonders vorteilhaften Weiterbildung der Erfindung ist vorgesehen, dass in einem Bereich zwischen dem ersten Anschlussabschnitt und dem zweiten Anschlussabschnitt ein weiteres Anschlusselement an dem Träger angeordnet, bevorzugt durch eine Clinchverbindung des einlagigen Verbindungsabschnitts des weiteren Anschlusselements mit einem rohrförmigen Abschnitt des Trägers verbunden ist.

Gemäß dieser Ausgestaltung der Erfindung weist die Stützvorrichtung einen weiteren, mindestens dritten Anschlussabschnitt auf, welcher an einem dritten Kraftfahrzeugbauteil befestigbar ist, sodass diese drei Fahrzeugbauteile in montiertem Zustand der Stützvorrichtung im Fahrzeug über die Stützvorrichtung gegeneinander abgestützt sind. Die Anordnung dieses weiteren Anschlusselements erfolgt dabei bevorzugt ebenfalls durch eine Clinchverbindung des einlagigen Verbindungsabschnitts des Anschlusselements mit einem rohrförmigen Abschnitt des Trägers. Insbesondere die vorteilhafter Weise vorgesehene Verwendung eines Rohrkörpers zeichnet sich dabei dadurch aus, dass dieser in einfacher Weise im Bereich zwischen dem ersten und zweiten Anschlussabschnitt mit weiteren Anschlusselementen versehen werden kann, nachdem hierzu der Rohrkörper lediglich mit einer Öffnung versehen werden muss, in die der einlagige Verbindungsabschnitt des Anschlusselements eingesteckt und anschließend in diesem Bereich mit dem Rohrkörper durch Clinchen verbunden wird. Gemäß dieser Ausgestaltung der Erfindung lassen sich somit besonders kompakte und komplexe Stützvorrichtungen besonders einfach und kostengünstig herstellen.

Nach einer weiteren Ausgestaltung der Erfindung ist vorgesehen, dass der Verbindungsabschnitt des Anschlusselements gegenüber dessen Kraftfahrzeugabschnitt abgesetzt ist. Bei dem Verbindungsabschnitt des Anschlusselements handelt es sich um den Bereich des Anschlusselements, welcher im Bereich des rohrförmigen Aufnahmeabschnittes des Trägers angeordnet ist. Der Kraftfahrzeugabschnitt hingegen dient zur Verbindung mit dem zu verbindenden Kraftfahrzeugbauteil und weist hierzu beispielsweise entsprechende Bohrung zur Aufnahme von Schraubverbindungen auf. Gemäß dieser Weiterbildung der Erfindung ist vorgesehen, dass der Verbindungsabschnitt gegenüber dem Kraftfahrzeugabschnitt abgesetzt ist, d. h. eine abweichende Dicke und oder Breite aufweist. Die Ausgestaltung des Übergangsbereichs zwischen dem Verbindungsabschnitt und dem Anschlusselement kann dabei grundsätzlich in beliebiger Weise, beispielsweise durch kontinuierlich ansteigende Flächen oder eine bogenförmige Ausgestaltung erreicht werden, wobei die abgesetzte Ausgestaltung die Möglichkeit bietet, den Träger gegenüber dem Anschlusselement formschlüssig - in Einschubrichtung des Verbindungsabschnitts in den Aufnahmeabschnitt betrachtet - abzustützen.

Nach einer besonders vorteilhaften Ausgestaltung der Erfindung ist dabei vorgesehen, dass der Aufnahmeabschnitt stirnseitig an einem Absatz zwischen Kraftfahrzeugabschnitt und Verbindungsabschnitt des Anschlusselements anliegt. Die Ausgestaltung des Übergangsbereichs zwischen dem Aufnahmeabschnitt und dem Kraftfahrzeugabschnitt durch einen Absatz lässt sich besonders einfach und kostengünstig herstellen. Zudem kann durch eine entsprechende Dimensionierung des rohrförmigen Aufnahmeabschnitts in einfacher Weise eine stirnseitige Abstützung des rohrförmigen Aufnahmeabschnitts an dem Anschlusselement erreicht werden, wodurch eine zuverlässige Positionierung und Übertragung sämtlicher Kräfte, insbesondere in Einschubrichtung des Verbindungsabschnitts in den Aufnahmeabschnitt, gewährleistet ist.

Die Ausgestaltung des Kraftfahrzeugabschnittes kann in beliebiger Weise entsprechend der Form des anzuschließenden Kraftfahrzeugbauteils gewählt werden. Nach einer besonders vorteilhaften Ausgestaltung der Erfindung weist der Kraftfahrzeugabschnitt einen sichelförmigen Verlauf auf. Ein sichelförmiger Verlauf des Kraftfahrzeugabschnittes ermöglicht die besonders einfache Verwendung der Stützvorrichtung als Domstrebe. Der Durchmesser des sichelförmigen Verlaufs ist dabei an die Dome der zu verbindenden Federbeine angepasst.

Das Anschlusselement kann grundsätzlich mehrteilig ausgebildet sein, beispielsweise einen einlagigen Verbindungsabschnitt aufweisen, welcher mit einem separaten Kraftfahrzeugabschnitt verbunden ist. Nach einer besonders vorteilhaften Ausgestaltung der Erfindung ist jedoch vorgesehen, dass das Anschlusselement einstückig ausgebildet ist und somit eine durchgehend einlagige Form aufweist. Diese Ausgestaltung der Erfindung ermöglicht es, das Anschlusselement in besonders einfacher Weise herzustellen, beispielsweise aus einem geeigneten Blechmaterial herauszustanzen oder zu schneiden, so dass sich die Stützvorrichtung besonders einfach und kostengünstig herstellen lässt.

Die Ausgestaltung der Clinchverbindung ist ebenfalls grundsätzlich frei wählbar. Dies betrifft insbesondere die Form, die entsprechend der zu übertragenden Last ausgewählt werden kann. Nach einer besonders vorteilhaften Ausgestaltung der Erfindung ist jedoch vorgesehen, dass die Clinchverbindung eine rechteckige Form aufweist und sich im Wesentlichen senkrecht zur Längsachse des Aufnahmeabschnitts erstreckt. Gemäß dieser Ausgestaltung der Erfindung ist vorgesehen, dass die Clinchverbindung in einer Draufsicht einen rechteckigen Verlauf aufweist, wodurch gewährleistet ist, dass eine besonders stabile Verbindung zwischen dem Anschlusselement und dem Träger besteht, so dass sämtliche im Betrieb auftretenden Lasten zuverlässig übertragen werden.

Nach einer besonders vorteilhaften Ausgestaltung der Erfindung können auch weitere Clinchverbindungen nebeneinander angeordnet sein, wobei besonders bevorzugt Aufnahmeabschnitt und Verbindungsabschnitt durch zwei versetzt zueinander angeordneten Clinchverbindungen miteinander verbunden sind. Gemäß dieser Ausgestaltung der Erfindung können beispielsweise zwei gleichartige, eine rechteckige Form aufweisende Clinchverbindungen parallel zueinander angeordnet sein. Alternativ können die Clinchverbindungen auch abgewinkelt zueinander verlaufen. Bei einer zueinander abgewinkelten Anordnung zweier oder mehrer Clinchverbindungen mit rechteckiger Form verlaufen diese mit einem gleichen oder unterschiedlichen Winkel zu einer Längsachse des Verbindungsabschnitts auf, wobei der Winkel mit der Längsachse zwischen 0° und 90° liegt.

Ein Ausführungsbeispiel der Erfindung wird nachstehend mit Bezug auf die Zeichnungen erläutert. In den Zeichnungen zeigen:
- Fig. 1: eine Draufsicht auf eine Stützvorrichtung;
- Fig. 2: eine Seitenansicht auf die Stützvorrichtung von Fig. 1;
- Fig. 3: eine Ansicht eines Schnitts entlang der Schnittlinie A-A von Fig. 1;
- Fig. 4: eine Draufsicht auf die Stützvorrichtung von Fig. 1 im nicht geclinchten Zustand;
- Fig. 5: eine Seitenansicht auf die Stützvorrichtung von Fig. 1 im nicht geclinchten Zustand und
- Fig. 6: eine Ansicht eines Schnitts entlang der Schnittlinie A-A von Fig. 4.

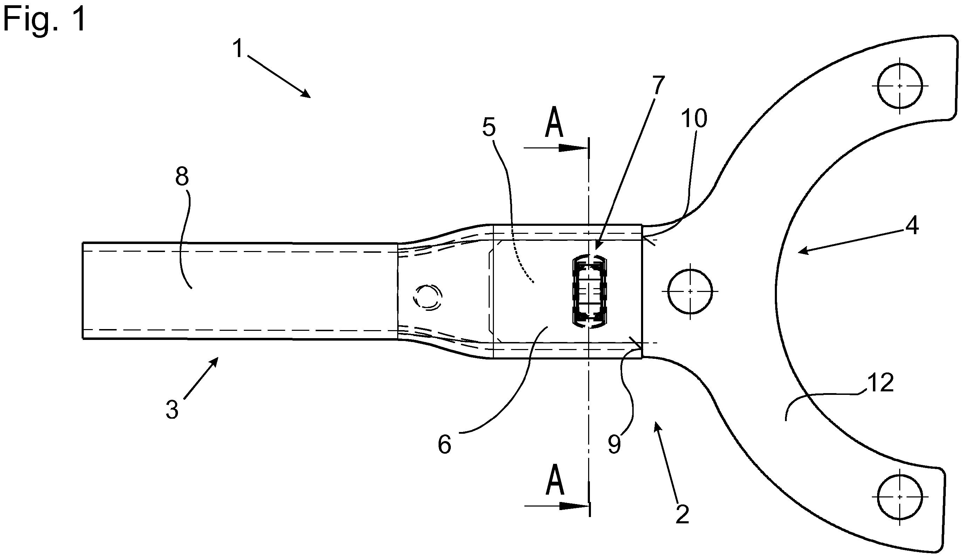

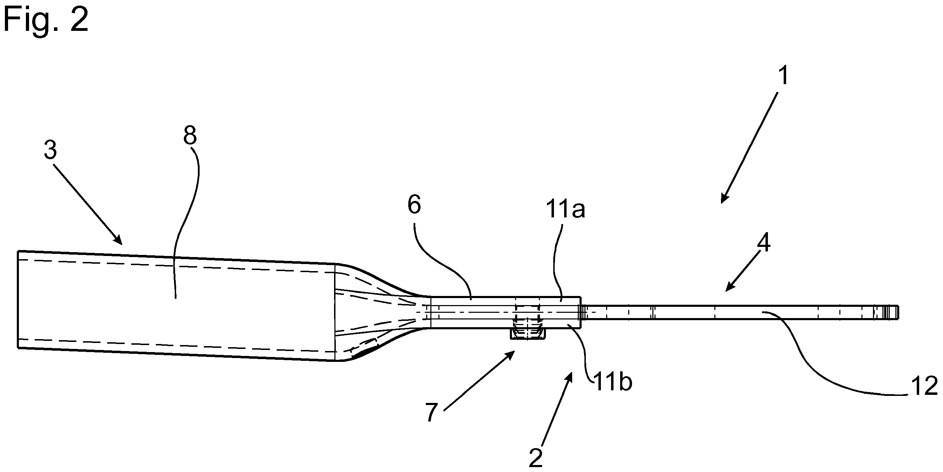

In den Figuren 1 bis 3 ist ein erster Anschlussabschnitt 2 einer Stützvorrichtung 1 dargestellt, wobei aufgrund der spiegelbildlichen Ausgestaltung des zweiten Anschlussabschnitts, welcher dem ersten Anschlussabschnitt 2 gegenüberliegt, auf eine vollständige Darstellung der Stützvorrichtung 1 verzichtet wurde.

Die Stützvorrichtung 1 weist im Bereich des ersten Anschlussabschnitts 2 ein Anschlusselement 4 auf, welches aus einem einlagigen Flachmaterial gebildet ist. Mit einem Verbindungsabschnitt 5 des Anschlusselements 4 ist das Anschlusselement 4 innerhalb eines rohrförmigen Aufnahmeabschnitts 6 des Trägers 3 angeordnet. Der Aufnahmeabschnitt 6 ist dabei durch Flachdrücken eines Endbereichs des als Rohrkörper 8 ausgebildeten Trägers 3 gebildet und liegt mit seiner dem Anschlusselement 4 zugewandten umlaufenden Stirnseite 10 an einem Absatz 9 des Anschlusselements 4 an, wobei der Absatz 9 den Verbindungsabschnitt 5 des Anschlusselements 4 von einem Kraftfahrzeugabschnitt 12 des Anschlusselements 4 abgrenzt. Der Kraftfahrzeugabschnitt 12 dient dabei zur Anbindung der Stützvorrichtung 1 an ein hier nicht dargestelltes Kraftfahrzeugbauteil und ist an dessen Form angepasst. In dem dargestellten Ausführungsbeispiel der Stützvorrichtung 1 ist der Kraftfahrzeugabschnitt 12 sichelförmig ausgebildet und dient zur Verbindung der Stützvorrichtung 1 mit einem hier nicht dargestellten Federbeindom eines Federbeins.

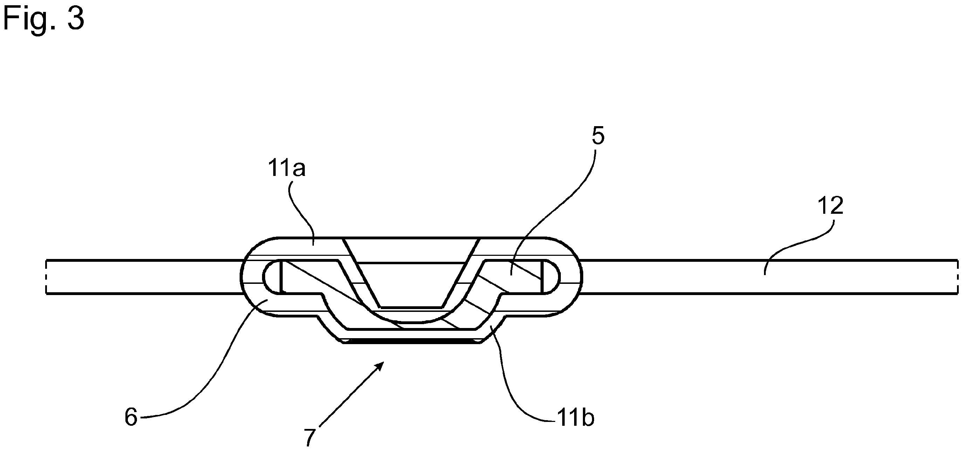

Die Verbindung zwischen dem Anschlusselement 4 und dem Verbindungsabschnitt 5 des Trägers 3 erfolgt durch eine Clinchverbindung 7 wobei der Verbindungsabschnitt 5 in dem durch Flachpressen des Rohrkörpers 8 gebildeten Aufnahmeabschnitt 6 angeordnet ist, so dass gegenüberliegende Flächen des Verbindungsabschnitts 5 an den gegenüberliegenden Abschnitten 11a, 11b des flachgedrückten Bereichs des Rohrkörpers 8 anliegen. In diesem Bereich sind der Verbindungsabschnitt 5 und der Aufnahmeabschnitt 6 durch die Clinchverbindung 7 kraft- und formschlüssig aneinander festgelegt, wobei durch das dreiwandige Clinchen die entsprechenden Bereiche von Verbindungsabschnitt 5 und Aufnahmeabschnitt 6 gemeinsam verformt sind (vgl. Fig. 3). Die Clinchverbindung 7 weist eine in der Draufsicht rechteckige Form auf, die sich im Wesentlichen senkrecht zu einer Längsachse des Verbindungsabschnitts 5 erstreckt.

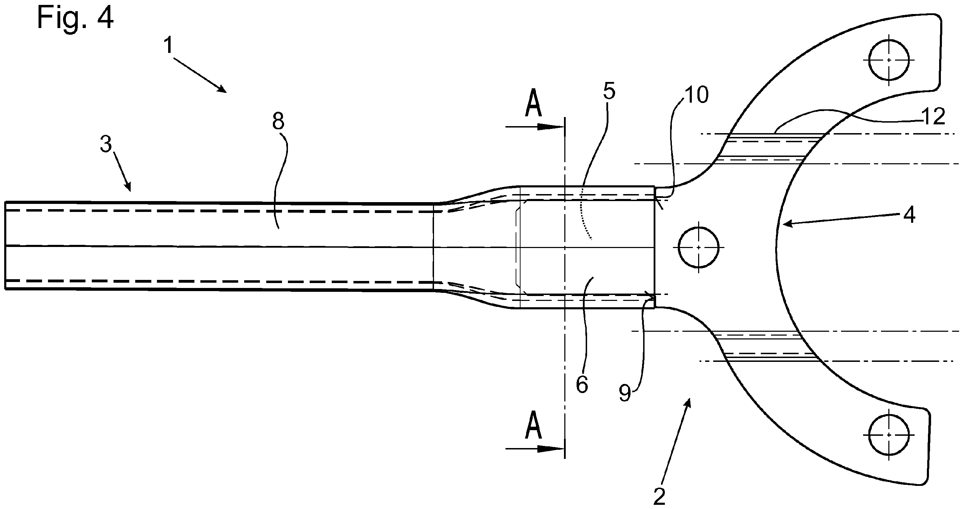

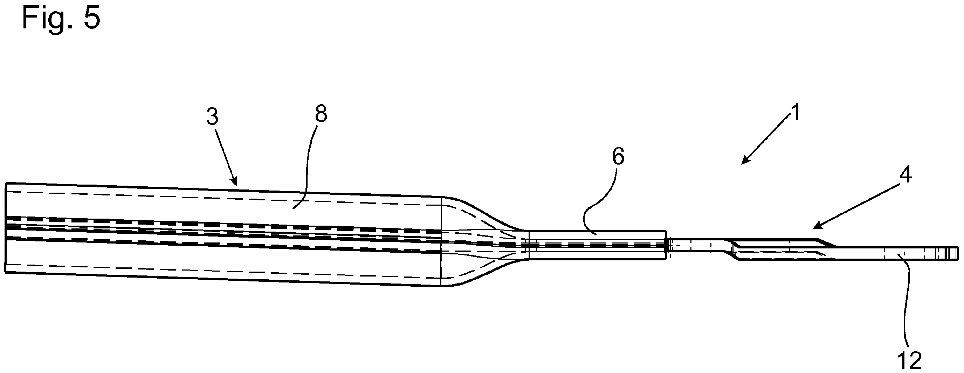

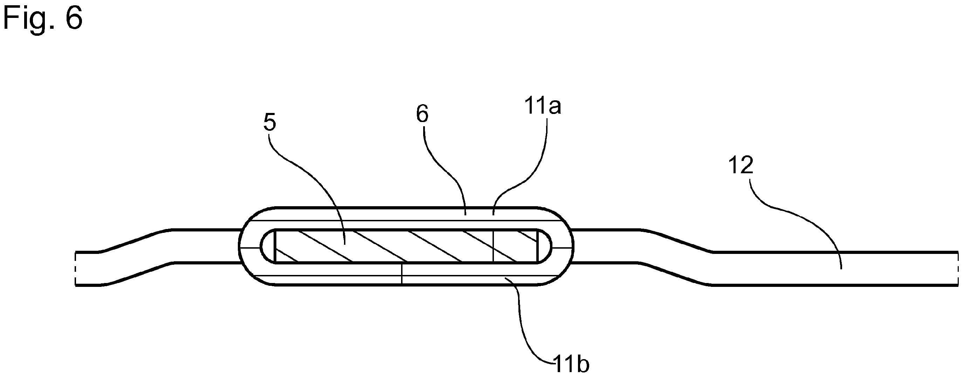

Die Anordnung des Anschlusselements 4 an dem Verbindungsabschnitt 5 vor dem Herstellen der Clinchverbindung 7 erfolgt durch einfaches Einsteckendes Verbindungsabschnitts 5 in den Aufnahmeabschnitt 6 bis in die in Figuren 4 bis 6 dargestellte Position. Hieran anschließend erfolgt die Herstellung der Clinchverbindung 7 mittels eines geeigneten, hier nicht dargestellten Werkzeugs, wobei die drei Bereiche gemeinsam durch einen Stempel des Werkzeugs unter plastischer Deformation in eine Matrize des Werkzeugs gedrückt werden. Das Anschlusselement 4 ist hiernach ortsfest an dem Träger 3 festgelegt.

### Bezugszeichenliste

- 1: Stützvorrichtung
- 2: erster Anschlussabschnitt (Stützvorrichtung)
- 3: Träger
- 4: Anschlusselement
- 5: Verbindungsabschnitt
- 6: Aufnahmeabschnitt (Träger)
- 7: Clinchverbindung
- 8: Rohrkörper
- 9: Absatz
- 10: Stirnseite
- 11a, 11b: Abschnitte
- 12: Kraftfahrzeugabschnitt

## Patentansprüche

1. Stützvorrichtung zur Übertragung von Lasten an einem Kraftfahrzeug, mit
- einem ersten Anschlussabschnitt zur Verbindung mit einem ersten Kraftfahrzeugbauteil,
- einem zweiten Anschlussabschnitt zur Verbindung mit einem zweiten Kraftfahrzeugbauteil und
- einem den ersten und zweiten Anschlussabschnitt verbindenden Träger,
**dadurch gekennzeichnet, dass** der erste Anschlussabschnitt (2) und/oder zweite Anschlussabschnitt ein Anschlusselement (4) mit einem einlagigen Verbindungsabschnitt (5) aufweist, der in einem rohrförmigen Aufnahmeabschnitt (6) des Trägers (3) angeordnet und durch eine Clinchverbindung (7) ortsfest mit dem Aufnahmeabschnitt (6) verbunden ist und die Stützvorrichtung (1) im Bereich der Clinchverbindung (7) dreilagig ausgebildet ist und eines von dem ersten Anschlussabschnitt (2) und dem zweiten Anschlussabschnitt einstückig mit dem Träger (3) ausgebildet ist.

2. Stützvorrichtung nach Anspruch 1, **dadurch gekennzeichnet, dass** der Träger (3) einen sich von dem ersten Anschlussabschnitt (2) zum zweiten Anschlussabschnitt erstreckenden Rohrkörper (8) aufweist.

3. Stützvorrichtung nach Anspruch 1 oder 2, **dadurch gekennzeichnet, dass** der Rohrkörper (8) einen kreisförmigen Querschnitt aufweist.

4. Stützvorrichtung nach einem oder mehreren der vorhergehenden Ansprüche, **dadurch gekennzeichnet, dass** in einem Bereich zwischen dem ersten Anschlussabschnitt (2) und dem zweiten Anschlussabschnitt ein weiteres Anschlusselement (4) an dem Träger (3) angeordnet und durch eine Clinchverbindung (7) des einlagigen Verbindungsabschnitts (5) des weiteren Anschlusselements (4) mit einem rohrförmigen Abschnitt des Trägers (3) verbunden ist.

5. Stützvorrichtung nach einem der vorliegenden Ansprüche, **dadurch gekennzeichnet, dass** der Verbindungsabschnitt (5) gegenüber einem Kraftfahrzeugabschnitt (12) des Anschlusselements (4) abgesetzt ist.

6. Stützvorrichtung nach einem oder mehreren der vorhergehenden Ansprüche, **dadurch gekennzeichnet, dass** der Aufnahmeabschnitt (6) stirnseitig an einem Absatz (9) zwischen Kraftfahrzeugabschnitt (12) und Verbindungsabschnitt (5) des Anschlusselements (4) anliegt.

7. Stützvorrichtung nach Anspruch 6 oder 7, **dadurch gekennzeichnet, dass** der Kraftfahrzeugabschnitt (12) einen sichelförmigen Verlauf aufweist.

8. Stützvorrichtung nach einem oder mehreren der vorhergehenden Ansprüche, **dadurch gekennzeichnet, dass** die Clinchverbindung (7) eine rechteckige Form aufweist und sich im Wesentlichen senkrecht zur Längsachse des Aufnahmeabschnitts (6) erstreckt.

9. Stützvorrichtung nach einem oder mehreren der vorhergehenden Ansprüche, **dadurch gekennzeichnet, dass** der Aufnahmeabschnitt (6) und der Verbindungsabschnitt (5) durch zwei versetzt zueinander angeordneten Clinchverbindungen (7) miteinander verbunden sind.

## Claims

1. A support device for transferring loads on a motor vehicle, comprising
- a first attachment portion for connection to a first motor vehicle component,
- a second attachment portion for connection to a second motor vehicle component, and
- a carrier connecting the first and second attachment portion,
**characterized in that** the first attachment portion (2) and/or second attachment portion comprises an attachment element (4) having a single-layer connection portion (5), which is arranged in a tubular receiving portion (6) of the carrier (3) and is fixedly connected to the receiving portion (6) by means of a clinch connection (7), and the support device (1) is designed to have three layers in the region of the clinch connection (7) and one of the first attachment portion (2) and the second attachment portion is designed to be integral with the carrier (3).

2. The support device according to claim 1, **characterized in that** the carrier (3) comprises a tubular body (8) that extends from the first attachment portion (2) to the second attachment portion.

3. The support device according to claim 1 or 2, **characterized in that** the tubular body (8) has a circular cross section.

4. The support device according to one or more of the preceding claims, **characterized in that** an additional attachment element (4) is arranged on the carrier (3) in a region between the first attachment portion (2) and the second attachment portion and is connected to a tubular portion of the carrier (3) by means of a clinch connection (7) of the single-layer connection portion (5) of the additional attachment element (4).

5. The support device according to any one of the present claims, **characterized in that** the connection portion (5) is stepped relative to a motor vehicle portion (12) of the attachment element (4).

6. The support device according to one or more of the preceding claims, **characterized in that** the end face of the receiving portion (6) abuts a shoulder (9) between the motor vehicle portion (12) and connection portion (5) of the attachment element (4).

7. The support device according to claim 6 or 7, **characterized in that** the motor vehicle portion (12) extends in the manner of a crescent.

8. The support device according to one or more of the preceding claims, **characterized in that** the clinch connection (7) is rectangular and extends substantially perpendicularly to the longitudinal axis of the receiving portion (6).

9. The support device according to one or more of the preceding claims, **characterized in that** the receiving portion (6) and the connection portion (5) are interconnected by means of two clinch connections (7) that are arranged so as to be offset relative to one another.

## Revendications

1. Dispositif d'appui pour le transfert de charges sur un véhicule automobile, comprenant :
- une première section de raccordement pour la connexion à un premier composant de véhicule automobile,
- une deuxième section de raccordement pour la connexion à un deuxième composant de véhicule automobile, et
- un support reliant les première et deuxième sections de raccordement,
**caractérisé en ce que** la première section de raccordement (2) et/ou la deuxième section de raccordement présente/présentent un élément de raccordement (4) avec une section de connexion à une seule couche (5), laquelle est disposée dans une section de réception tubulaire (6) du support (3) et reliée fixement à la section de réception (6) à l'aide d'une connexion par clinchage (7), et le dispositif d'appui (1) est formé avec trois couches dans la région de la connexion par clinchage (7), et l'une parmi la première section de raccordement (2) et la deuxième section de raccordement est formée intégralement avec le support (3).

2. Dispositif d'appui selon la revendication 1, **caractérisé en ce que** le support (3) présente un corps tubulaire (8) s'étendant de la première section de raccordement (2) à la deuxième section de raccordement.

3. Dispositif d'appui selon la revendication 1 ou 2, **caractérisé en ce que** le corps tubulaire (8) présente une section transversale circulaire.

4. Dispositif d'appui selon l'une ou plusieurs des revendications précédentes, **caractérisé en ce que** dans une région située entre la première section de raccordement (2) et la deuxième section de raccordement, un autre élément de raccordement (4) est disposé sur le support (3) et relié à une section tubulaire du support (3) à l'aide d'une connexion par clinchage (7) de la section de connexion à une seule couche (5) de l'autre élément de raccordement (4).

5. Dispositif d'appui selon l'une des revendications précédentes, **caractérisé en ce que** la section de connexion (5) est décalée par rapport à une section de véhicule automobile (12) de l'élément de raccordement (4).

6. Dispositif d'appui selon l'une ou plusieurs des revendications précédentes, **caractérisé en ce que** la section de réception (6) s'applique côté frontal sur un gradin (9) situé entre la section de véhicule automobile (12) et la section de connexion (5) de l'élément de raccordement (4).

7. Dispositif d'appui selon la revendication 6 ou 7, **caractérisé en ce que** la section de véhicule automobile (12) présente un tracé en forme de croissant.

8. Dispositif d'appui selon l'une ou plusieurs des revendications précédentes, **caractérisé en ce que** la connexion par clinchage (7) présente une forme rectangulaire et s'étend essentiellement perpendiculairement à l'axe longitudinal de la section de réception (6).

9. Dispositif d'appui selon l'une ou plusieurs des revendications précédentes, **caractérisé en ce que** la section de réception (6) et la section de connexion (5) sont reliées entre elles par deux connexions par clinchage (7) disposées de façon décalée l'une par rapport à l'autre.
